# EUROPÄISCHE PATENTSCHRIFT

(11) **EP 0 981 696 B1**
(45) Veröffentlichungstag und Bekanntmachung des Hinweises auf die Patenterteilung: **10.09.2003**
(21) Anmeldenummer: 99908741.4
(22) Anmeldetag: 20.01.1999
(51) Int. Cl.: F16H 1/32, H02K 7/116

(54) **EXZENTERZAHNRADGETRIEBE**
ECCENTRIC TOOTHED GEAR
TRANSMISSION A ROUE DENTEE EXCENTRIQUE

(30) Priorität: 30.01.1998 DE 19803747
(43) Veröffentlichungstag der Anmeldung: 01.03.2000
(73) Patentinhaber: ROBERT BOSCH GMBH, 70442 Stuttgart (DE)
(72) Erfinder: MOSKOB, Frank, 77830 Bühlertal (DE)
(74) Vertreter: Isenbruck, Günter, Dr.
(86) Internationale Anmeldenummer: DE9900119
(87) Internationale Veröffentlichungsnummer: WO99039114

(56) Entgegenhaltungen:
- EP-A- 0 840 037
- BE-A- 428 920
- DE-A- 4 127 051
- DE-A- 19 729 620
- DE-U- 9 116 261
- US-A- 4 228 698

## Beschreibung

### Technisches Gebiet

Ein Elektromotor mit Exzenterzahnradgetriebe entsprechend den Merkmalen von Anspruch 1, gemäß der Erfindung dient zur Übersetzung der Drehbewegung von Verstellmotoren.

### Stand der Technik

Zur Drelizahireduzierung von Verstellmotoren mit einer Ankerdrehzahl von etwa 7000 l/min werden Schneckengetriebe eingesetzt.

Die eingesetzten Schneckengetriebe haben den Vorteil, daß sie eine Selbsthemmung von der Abtriebsseite her aufweisen. Die verwendeten Motoren besitzen zwei Kohlebürsten und einen Kommutator. Wegen des zur Erzielung ausreichender Drehmomente notwendigen großen Übersetzungsverhältnisses, beispielsweise zum Antrieb als Fensterheber in einem Kraftfahrzeug, sind die Außenabmessungen eines aus Motor und nebenliegend angeordnetem Getriebe bestehenden Verstellmotors beträchtlich.

Das gattungsbildende Dokument US 4,228,698 bezieht sich auf ein Reduziergetriebe, welches durch einen als Elektromotor oder Hydraulikantrieb ausgebildeten Antrieb angetrieben wird. Das Reduziergetriebe umfasst eine Abtriebswelle und eine Antriebswelle. Der hydraulische bzw. der elektromotorische Antrieb und das Reduziergetriebe sind stirnseitig miteinander verbunden.

DE 197 29 620 A1 bezieht sich auf eine Untersetzungsvorrichtung mit Freilaufkupplung. Eine Untersetzungsvorrichtung mit einer Freilaufkupplung weist eine Antriebswelle mit einem an diese ausgebildeten Exzenterring und eine Innenradplatte auf, die bezüglich dem Exzenterring drehbar ist. Um die Radplatte herum angeordnet befindet sich eine Vielzahl von Zähnen, wobei die Radplatte Eingriffslöcher umfasst. Ferner sind Befestigungsstifte vorgesehen, die am Gehäuse hin Eingriff in die Eingriffslöchern der Innenradplatte befestigt sind, um die Drehung der Innenradplatte zu begrenzen, wodurch das Umlaufen der Radplatte ermöglicht wird. Ferner ist ein Außenring vorgesehen, der sich um die Innenradplatte herum angeordnet befindet und mit einer angetriebenen Welle verbunden ist. Ein Drehmomentübertragungselement, das mit den Zähnen der Innenradplatte in Eingriff gelangt verdreht das Drehmoment von der Innenradplatte an den Außenring. Das Drehmomentübertragungselement steht mit den Zähnen der Innenradplatte durch Zentrifugalkraft ausser Eingriff, wenn sich der Außenring mit einer höheren Drehzahl als einem Schwellwert dreht.

DE 41 27 051 A1 hat ein Präzisionsgetriebe zum Gegenstand. Das Präzisionsgetriebe arbeitet nach dem Prinzip des Differenzgetriebes. Der Abtrieb bei einer Ausführungsform ist als Untersetzungsgetriebe mit großen Übersetzungen als Zahnkranzglocke ausgebildet. Mit der Innenverzahnung der Zahnkranzglocke wirkt die Außenverzahnung einer Zahnradscheibe zusammen, welche von einem mit der Antriebswelle verbundenen Exzenter angetrieben und von einem Kreuzschlitzschieber geführt ist.

DE 91 16 261.0 U hat einen Antriebsmechanismus zum Gegenstand. Ein glockenförmiges Bauelement dient als Aufnahme für das Übersetzungsgetriebe, wobei ein das Übersetzungsgetriebe antreibender Antrieb seitlich an das glockenförmig konfigurierte Bauteil 8 angeflanscht ist.

Der Erfindung liegt die Aufgabe Zugrunde, eine sehr kompakt bauende Antriebseinheit bereitaustellen.

### Darstellung der Erfindung

Ein Elektromotor mit Exzenterzahnradgetriebe gemäß der Erfindung hat den Vorteil, daß es bei sehr kompakten Abmessungen eine Selbsthemmung und einen einfachen Aufbau aufweist.

Gegenüber den bekannten Schneckengetrieben ist das Exzenterzahnradgetriebe vergleichsweise toleranzunempfindlich, da alle rotierenden Teile auf einer Achse gelagert sind. Gemäß einer Weiterbildung ist ein einziges Führungselement vorgesehen, welches durch die Führung in dem feststehenden Gehäuseteil das vollständige Verdrehen des Exzenterrades verhindert. Es findet lediglich eine zyklische Bewegung des Exzenterrades um eine Mittellage herum statt.

Um die Bewegung des Exzenterrades zu vergleichmäßigen, insbesondere das Drehmoment, ist das Führungselement auf einem mit dem Exzenterrad verbundenen Lagerarm in über das Exzenterrad hinausgehendem radialen Abstand zu einer Mittelachse angeordnet, wobei der radiale Abstand möglichst groß zu wählen ist. Durch diese Verlängerung des Hebelarmes wird bereits eine Vergleichmäßigung des Abtriebs erreicht.

Ein zumindest theoretisch vollständig gleichmäßiger Abtrieb wird dadurch erreicht, daß das Gehäuseteil ein Führungselement mit Führungsrichtung senkrecht zu einer Mittelachse aufweist und daß das Exzenterrad zwei Führungselemente aufweist, welche in einer Richtung senkrecht zur Mittelachse und senkrecht zur Bewegungsrichtung des Führungselements in diesem geführt sind. Durch die entkoppelte Führung des Exzenterrades in den beiden zur Drehachse senkrechten Führungsrichtungen wird jede Drehbewegung des Exzenterrades vermieden. Dadurch wird ein vollständig gleichmäßiger Abtrieb erreicht. Da der Führungsmechanismus alle Drehmomente die auf dem Abtrieb von außen einwirken komplett aufnimmt, (Selbsthemmung) kann das Getriebe für Stellvorgänge eingesetzt werden, in denen die eingestellte Lage auch unter Krafteinwirkung erhalten bleibt. Ein Anwendungsbeispiel hierfür ist der Einsatz bei elektrischen Fensterhebern.

Gemäß einer vorteilhaften Weiterbildung wird der Antrieb des Exzenterzahnradgetriebes durch einen Anker eines Elektromotors gebildet. Dadurch, daß der Motor unmittelbar in das Getriebe integriert wird, verringert sich der insgesamt erforderliche Bauraum weiter. Gemäß einer Weiterbildung wird eine kompakte Einheit aus Exzenterzahnradgetriebe und Motor geschaffen.

### Zeichnung

In der Zeichnung ist ein Verstellmotor mit Exzenterzahnradgetriebe dargestellt. Es zeigt die:
- Fig. 1: einen Elektromotor mit einem ersten Exzenterzahnradgetriebe im Längsschnitt, die
- Fig. 2: einen Schnitt im Bereich des Getriebes längs der Linie A-A aus Fig. 1, die
- Fig. 3: ein zweites Ausführungsbeispiel eines Exzenterzahnradgetriebes, die
- Fig. 4: einen Schnitt entlang der Linie A-A aus Fig. 3, die
- Fig. 5 bis 8: eine Abfolge der Bauteilbewegungen bei einer vollständigen Umdrehung des Exzenterrads.

### Ausführungsbeispiele

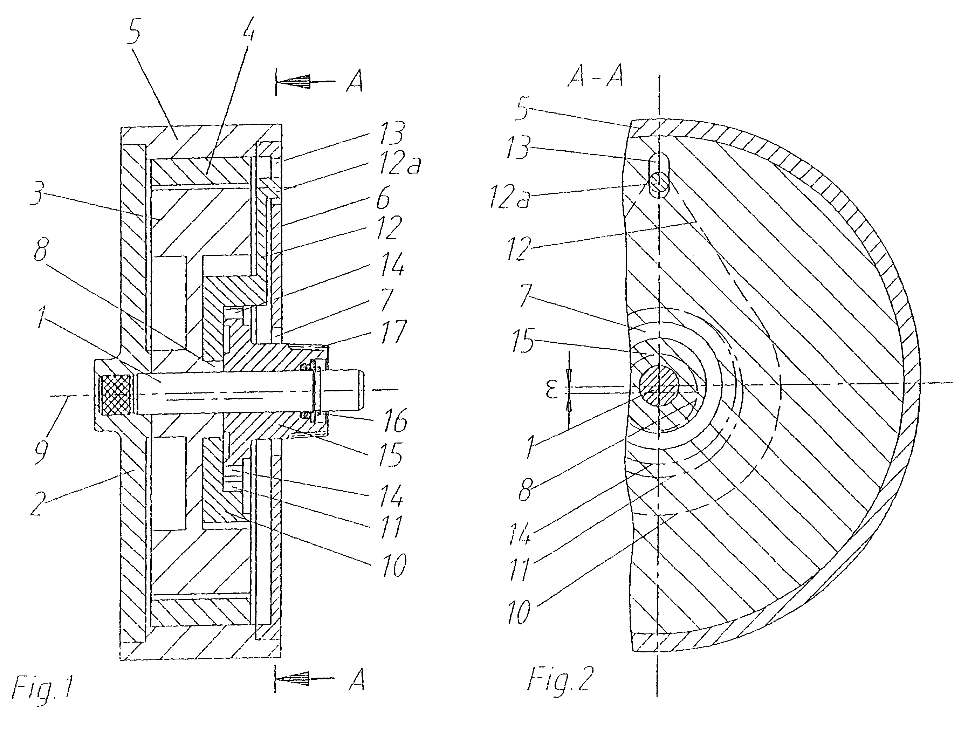

In Figur 1 ist ein Elektromotor mit integriertem Exzenterzahnradgetriebe im Längsschnitt dargestellt. Ohne weiteres zu erkennen ist eine Achse 1, welche in einem Gehäudeboden 2 drehfest befestigt ist. Auf der Achse 1 ist ein Anker 3 drehbar angeordnet, der durch Spulen 4 angetrieben wird. Die Spulen 4 sind in einem zylindrischem Gehäuseabschnitt 5 innenliegend angeordnet, wobei an dem Gehäuseabschnitt 5 auch der Gehäuseboden befestigt ist. Auf der dem Gehäuseboden 2 gegenüberliegenden Seite am Motorgehäuse 5 ist ein Gehäusedeckel 6 mit einer zentralen Öffnung 7 angebracht. Durch diese zentrale Öffnung 7 ragt das andere Ende der Achse 1.

Der im Inneren des durch den Gehäuseboden 2, das Motorgehäuse 5 und den Gehäusedeckel 6 gebildeten Raums angeordnete Anker 3 ist mit einem Exzenter 8 versehen, der sich entlang der Mittelachse 9 axial erstreckt. Auf dem Exzenter 8 sitzt ein Exzenterrad 10, welches über einen ein Führungselement darstellenden Zapfen 12a, der hier zur Verlängerung des Hebelarmes an einem Lagerarm 12 möglichst weit zur Achse 1 radial beabstandet, in einer sich in radialer Richtung erstreckenden Öffnung 13 des Gehäusedeckels 6 lose geführt ist.

An einem Innenumfang des Exzenterrads 10 ist eine Innenverzahnung 11 ausgebildet. Diese Innenverzahnung 11 greift abschnittsweise in die Außenverzahnung 14 eines Mitnehmers 15 ein, der drehbar auf der Achse 1 durch die Befestigungsmittel 16 befestigt ist. Der Mitnehmer 15 ragt durch den Gehäusedeckel 6 hindurch aus dem Motorgehäuse heraus und ist in diesem Bereich mit einer weiteren Außenverzahnung 17 versehen.

Die Wirkungsweise des Elektromotors mit Exzentergetriebe wird im folgenden erläutert. Ausgehend von dem festen Gehäuse, gebildet aus dem Gehäuseboden 2, dem zylindrischen Gehäuseabschnitt 5 und dem Gehäusedeckel 6 und der mit dem Gehäuseboden 2 drehfest verbundenen Achse 1 als unbewegliche Bauteile, wird oberhalb der mit dem zylindrischen Gehäuseabschnitt 5 fest verbunden Spulen 4 ein Magnetfeld induziert, wodurch sich der Anker 3 um die Achse 1 zu drehen beginnt. Durch die Drehung des Ankers 3 um die Achse 1 findet im Bereich des Exzenters 8 eine Bewegung des Exzenterrades 10 statt. Diese Bewegung wird zum einen durch den Exzenter 8 vorgegeben, zum anderen durch den in der Öffnung 13 im Gehäusedeckel 6 seitlich, d.h. in Umfangsrichtung geführten Zapfen 12a. Diese Zapfen 12a verhindert eine Drehbewegung des Exzenterrades 10 zusammen mit dem Anker 3 und bewirkt, daß das Exzenterrad in einer zur Drehachse 9 senkrechten Richtung bewegt wird. Dabei bewegt es sich nicht nur nach oben und unten, sondern dem Exzenter folgend, auch in die Zeichenebene hinein bzw. aus ihr heraus. Diese Bewegung ähnelt der einer Pleuelstange eines Kolbenantriebs, wobei jedoch in den erfindungsgemäßen Ausgestaltungen in der Regel die Exzentrizität deutlich geringer ist.

Durch diese exzentrische Bewegung des Exzenterrades 10 ist jeweils nur ein Teil der Innenverzahnung 11 mit der Außenverzahnung 14 des Mitnehmers 15 in Eingriff. In der unteren Hälfte der Figur 1 ist die Innenverzahnung 11 in deutlichem Abstand zu der Außenverzahnung 14, wohingegen in der oberen Hälfte die Innenverzahnung in die Außenverzahnung 14 des Mitnehmers 15 in Eingriff ist. Durch die Drehung des Ankers 3 wird aufgrund der Bewegung des Exzenterrades 10 die Drehrichtung des Mitnehmers 15 zur Drehrichtung des Ankers 3 entgegengesetzt.

In Figur 2 ist ein Schnitt längs der Linie A-A aus Figur 1 dargestellt. Man erkennt die Achse 1 und den um diese Achse 1 angeordneten Exzenter 8, dargestellt als gestrichelte Linie. Die Exzentrizität ∈ ist gegenüber dem Abstand zu dem Zapfen 12a gering. Der Zapfen 12a ist in der Öffnung 13 in dem Gehäusedeckel 6 so geführt, daß er sich verdrehen kann und in radialer Richtung längsverschieblich ist. Das Exzenterrad 10 ist in der untersten Stellung gezeigt, d.h. der Abstand ∈ ist in diesem Koordinatensystem maximal. Die Folge davon ist, daß die Innenverzahnung 11 des Exzenterrads 10 auf der Seite der Auslenkung nicht mit der Außenverzahnung 14 des Mitnehmers 15 im Eingriff steht. Zwischen der Innenverzahnung 11 und der Außenverzahnung 14 ist ein sichelförmiger Spalt, dessen Weite durch den zunehmenden Eingriff auf der der Exzentrizität entgegengesetzten Seite verringert wird.

Zwar ist es grundsätzlich möglich, den Zapfen 12a ohne Lagerarm 12 am Exzenterrad 10 anzuordnen, ein langer Lagerarm hat aber den Vorteil, daß die Abtriebsbewegung bezüglich der Winkelgeschwindigkeit vergleichmäßigt wird.

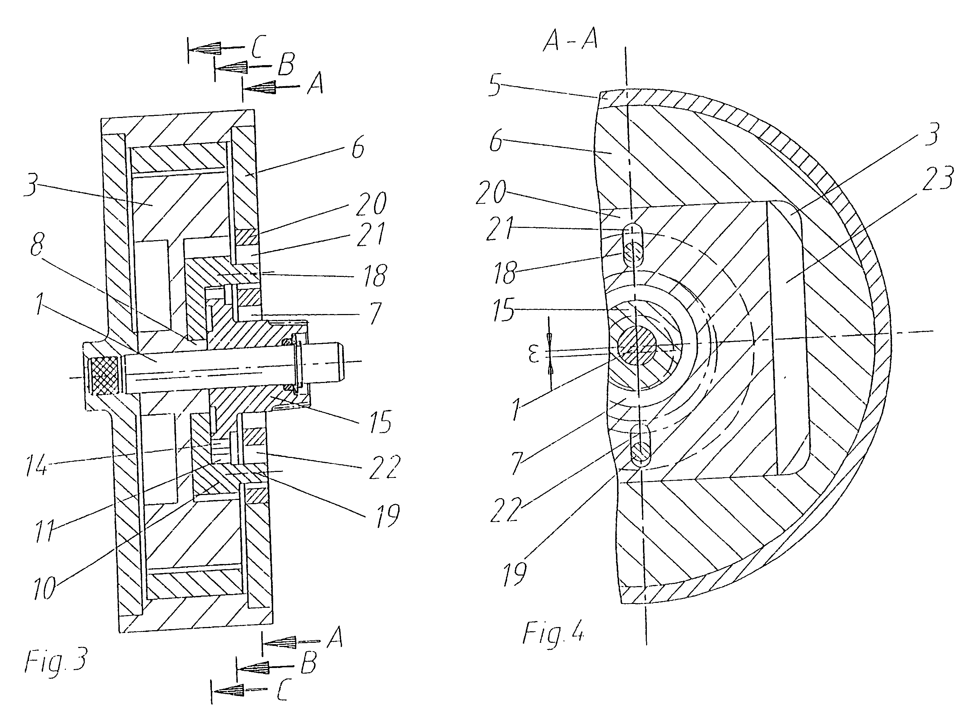

In Figur 3 ist ein weiteres Ausführungsbeispiel mit einem gleichmäßigen Abtrieb dargestellt. Für gleichartige Teile werden dieselben Bezugsziffern verwendet, wie in den vorhergehenden Figuren. Besonders erläutert wird hier das unterschiedlich ausgebildete Exzenterrad 10 sowie dessen Führung im Gehäusedeckel 6. Das Exzenterrad 10 sitzt auf dem Exzenter 8 des Ankers 3 auf und ist mit der Innenverzahnung 11 vesehen. Im Gegensatz zum ersten Ausführungsbeispiel sind an dem Exzenterrad 10 zwei Führungselemente in Form von zwei Zapfen 18, 19 parallel zur Achse 1 an dem Exzenterrad 10 befestigt, die im Bereich des Gehäusedeckels 6 in einem weiteren Führungselement in Form eines Schiebers 20 längsverschieblich geführt sind. Dazu weist der Schieber 20 Öffnungen 21 bzw. 22 auf, die als Langlöcher bezeichnet werden können. Der Schieber 20 ist wiederum in einer Ausnehmung 23 des Gehäusedeckels 6 in einer Bewegungsrichtung senkrecht zu dem Zapfen 18 bzw. 19 längsverschieblich geführt.

Die doppelte Führung hat zum Ziel, ein Verdrehen des Exzenterrades zu verhindert und gleichzeitig die Exzenterbewegung, d.h. die Überlagerung von 2 Bewegungsrichtungen, die zueinander senkrecht stehen, zu ermöglichen.

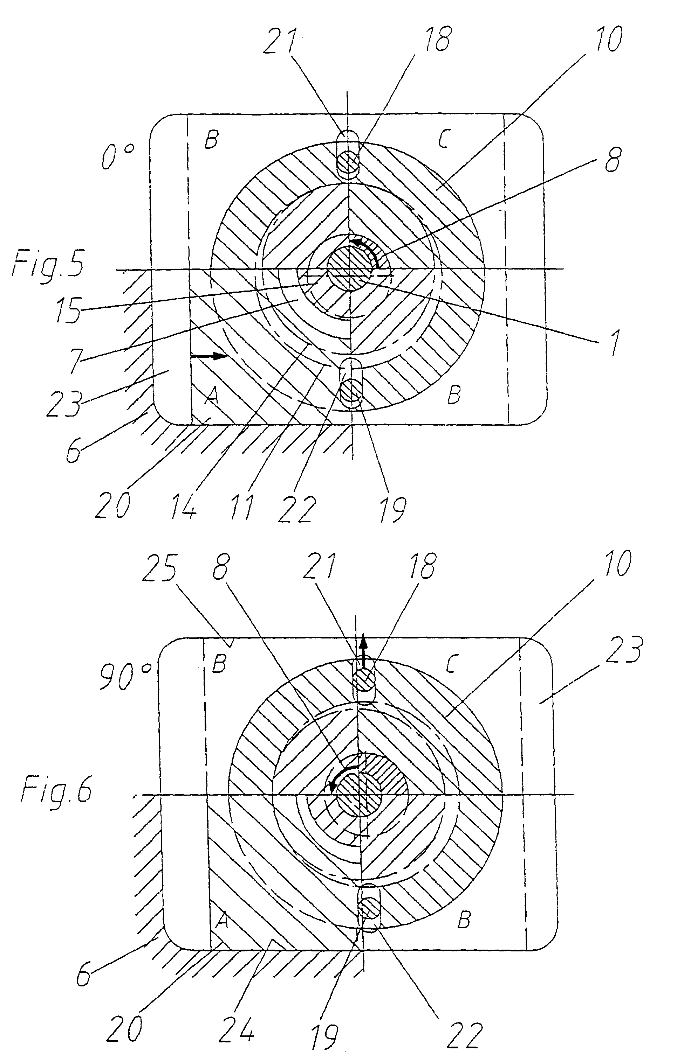

In Figur 4 wird die Anordnung des Schiebers 20 in dem Gehäusedeckel 6 deutlich. Der Schieber 20 ist in einer Mittelstellung dargestellt, da sich der Exzenter in einer unteren maximalen Auslenkung befindet. Die Zapfen 18 bzw. 19 sind in ihrer maximalen, unteren Position und das Exzenterrad ist mit dem Mitnehmer im oberen Bereich der Verzahnung, das ist in der Nähe des Bolzens 18, formschlüssig durch ineinandergreifende Zähne verbunden. Der zeitliche Abstand zwischen dem Schieber 20 und der Begrenzung der Öffnung 23 verringert sich bei fortschreitender Bewegung maximal um den Betrag der Exzentrität ε. Durch die doppelte Führung wird die Kreisbewegung störungsfrei gleichmäßig auf den Mitnehmer 15 übertragen. In den Figuren 5 bis 8 sind verschiedene Stellungen der einzelnen Bauteile zueinander in Abhängigkeit des Verdrehwinkels dargestellt. In den Figuren sind jeweils verschiedene Schnittebenen A, B, C der Schnitte gemäß Figur 3 gezeigt, wobei durch Pfeile die Bewegungsrichtung angedeutet ist.

In Figur 5 wird die bisher gezeigte Position als Ausgangspunkt dargestellt und mit der Winkelbezeichnung 0° dargestellt. In dem Feld A ist der Schieber 20 dargestellt, der sich in seiner Mittellage befindet und dabei ist, bei fortschreitender Verdrehung eine Bewegung nach rechts aufzuführen. Die Zapfen 18, 19 befinden sich in einer maximalen unteren Lage in ihren Führungen 21, 22. Aus dem Schnitt in dem Feld C ist die Lage des Exzenters 8 als Vollschnitt zu erkennen, in den übrigen Feldern A und B wird der Exzenter 8 als gestrichelte Linie dargestellt. Zur Markierung des Exzenters und zum Hinweis auf seine Drehrichtung ist ein Pfeil angebracht.

Weiterhin sind der Mitnehmer 15 und die Durchbrechung 7 in dem Schieber 20 in dem Feld A dargestellt. Zu erkennen sind auch der Wälzkreis der Innenverzahnung 11 des Exzenters sowie der Wälzkreis der Außenverzahnung 14 des Mitnehmers 15, dargestellt. Zwischen diesen Wälzkreisen ergibt sich aufgrund der fortschreitenden Lageänderung ein variabler Spalt.

In Figur 6 wurde der Exzenter 8 um 90° gegen den Uhrzeigersinn gedreht. Als Folge dieser Drehung wurde das Exzenterrad 10 nach rechts bewegt und dabei angehoben. Dies kommt auch dadurch zum Ausdruck, daß die Zapfen 18, 19 in den Längslöchern 21, 22 nach oben gewandert sind und daß sich der seitliche Raum 23 verringert hat. Eine Verdrehung des Exzenterrads 10 hat allerdings nicht stattgefunden, da dieser Freiheitsgrad aufgrund der doppelt geführten Zapfen 18, 19 eingeschränkt ist. Die Führung des Schiebers 20 in dem Gehäusedeckel erfolgt entlang der Seitenflächen 24, 25. Der Schieber 20 weist seine maximale Auslenkung auf die rechte Seite der Zeichnung um den Betrag der Exzentrizität ∈ hin auf.

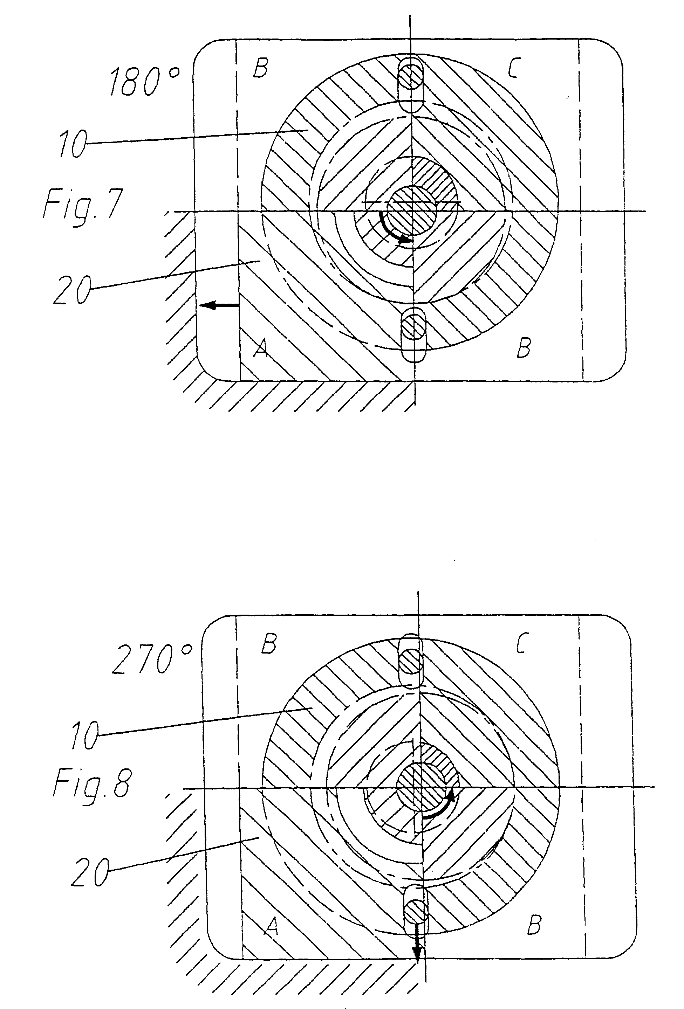

In Figur 7 findet man nach einer erneuten Verdrehung des Exzenters 8 um weitere 90° auf 180° die entgegengesetzte Position aus Figur 5 wieder. Der Schieber 20 befindet sich in seiner Mittellage, und das Exzenterrad 10 ist maximal nach oben ausgelenkt, wiederum um den Betrag der Exzentrizität ε.

In der Figur 8 ist nach einer weiteren Verdrehung um 90° auf insgesamt 270° die zu Figur 6 entgegengesetzte Lage gezeigt. Der Schieber 20 befindet sich in seiner Maximalauslenkung zu der linken Seite der Zeichnung hin, wobei das Exzenterrad 10 sich in einer vertikalen Mittellage befindet.

Als Antrieb kann wahlweise ein Anker mit Bürsten oder ein bürstenloser Anker (elektronisch kommutiert) verwendet werden. Von besonderem Vorteil ist, daß das Getriebe selbsthemmend ausgeführt werden kann und gegenüber Schneckengetrieben vergleichsweise toleranzunempfindlich ist, da alle rotierenden Teile auf einer Achse gelagert sind. Selbstverständlich ist es auch möglich, anstelle des Ankers beispielsweise ein Schneckenrad aus einem Schneckengetriebe vorzusehen, welches als erste Stufe eines dann zweistufigen Getriebes anzusehen wäre. Auf welche Weise der Antrieb des Exzenters erfolgt, ist für die Wirkungsweise des Getriebes nicht von Bedeutung.

Bei rotierendem Anker bewegt sich das Exzenterrad in den Führungslöchern 21, 22 des Schiebers 20 in Y-Richtung und der Schieber in x-Richtung. Das Exzenterrad bewegt sich somit auf einer Kreisbahn, ohne sich jedoch um die eigene Achse zu drehen. Dadurch wird ein gleichmäßiger Abtrieb am Mitnehmer 15 erreicht.

## Patentansprüche

1. Elektromotor mit Exzenterzahnradgetriebe, wobei der Elektromotor einen Anker (3), in einen Motorgehäuseabschnitt (5) angeordnete Spulen (4), einen Gehäusedeckel (6) und einen integrierten Bolzen (1) umfasst und das Exzenterzahnradgetriebe ein auf einem Exzenter (8) gelagertes Exzenterrad (10) mit Innenverzahnung (11), einen Mitnehmer (15) mit einer Außenverzahnung (14) umfasst, wobei die Verzahnungen (11, 14) durch abschnittsweises Ineinandergreifen zusammenwirken, wobei der Mitnehmer (15) auf dem integrierten Bolzen (1) aufgenommen ist, wobei das Exzenterrad (10) drehbar mit dem Exzenter (8) verbunden ist und Führungselemente (12a; 18, 19) aufweist, **dadurch gekennzeichnet, dass** diese Führungselemente (12a; 18, 19) entweder im feststehenden Gehäusedeckel (6) in einer als Führung dienenden Öffnung (13) unmittelbar geführt sind oder in Öffnungen (21, 22) geführt sind, welche in einem im Gehäusedeckel (6) aufgenommen und darin verschieblich geführten Schieber (20) eingebracht sind.

2. Elektromotor mit Exzenterzahnradgetriebe nach Anspruch 1, **dadurch gekennzeichnet, dass** ein einziges Führungselement (12a) vorgesehen ist.

3. Elektromotor mit Exzenterzahnradgetriebe nach Anspruch 2, **dadurch gekennzeichnet, dass** das einzige Führungselement (12a) auf einem mit dem Exzenterrad (10) verbundenen Lagerarm (12) in über das Exzenterrad (10) hinausgehendem radialen Abstand zu einer Mittel-achse (9) angeordnet ist.

4. Elektromotor mit Exzenterzahnradgetriebe nach Anspruch 1, **dadurch gekennzeichnet, dass** das Gehäuseteil (6) ein Führungselement (20) in einer Richtung senkrecht zu einer Mittelachse (9) aufweist und dass das Exzenterrad (10) zwei Führungselemente (18, 19) aufweist, welche in einer Richtung senkrecht zur Mittelachse (9) und senkrecht zur Bewegungsrichtung des Führungselements (20) geführt sind.

## Claims

1. Electric motor with eccentric gear mechanism, the electric motor comprising an armature (3), coils (4) arranged in a motor casing section (5), a casing cover (6) and an integrated bolt (1), and the eccentric gear mechanism comprising an eccentric wheel (10) which is mounted on an eccentric (8) and has internal toothing (11), and a driver (15) with an external toothing (14), the toothings (11, 14) interacting by engaging one in the other in certain sections, the driver (15) being held on the integrated bolt (1), the eccentric wheel (10) being rotatably connected to the eccentric (8) and having guide elements (12a; 18, 19), **characterized in that** these guide elements (12a; 18, 19) are either guided directly in the fixed casing cover (6) in an opening (13) which serves as a guide or are guided in openings (21, 22) which are provided in a slide (20) which is accommodated in the casing cover (6) and displaceably guided therein.

2. Electric motor with eccentric gear mechanism according to Claim 1, **characterized in that** a single guide element (12a) is provided.

3. Electric motor with eccentric gear mechanism according to Claim 2, **characterized in that** the single guide element (12a) is arranged on a bearing arm (12) connected to the eccentric wheel (10), said arrangement being at a radial distance from a central axis (9) which is beyond the eccentric wheel (10).

4. Electric motor with eccentric gear mechanism according to Claim 1, **characterized in that** the housing part (6) has a guide element (10) in a direction which is perpendicular to a central axis (9), and **in that** the eccentric wheel (10) has two guide elements (18, 19) which are guided in a direction perpendicular to the central axis (9) and perpendicular to the direction of movement of the guide element (20).

## Revendications

1. Moteur électrique à transmission à roue dentée excentrique dont le moteur comporte un induit (3), des bobines (4) dans un segment (5) du boîtier du moteur, un couvercle (6) de boîtier et un axe (1) intégré, et dont la transmission à roue dentée excentrée comprend une roue excentrique (10) montée sur un excentrique (8) avec une denture intérieure (11), un organe d'entraînement (15) avec une denture extérieure (14),
les dentures (11, 14) coopérant en étant en prise par segment, et l'organe d'entraînement (15) étant monté sur le goujon intégré (1), la roue excentrique (10) étant reliée en rotation à l'excentrique (8) et comportant des éléments de guidage (12a, 18, 19),
**caractérisé en ce que**
ces éléments de guidage (12a, 18, 19) sont guidés soit directement dans le couvercle (6) fixe dans une ouverture (13) servant de guide, soit dans des ouvertures (21, 22) réalisées dans un coulisseau (20) logé dans le couvercle (6) et guidé en coulissement dans celui-ci.

2. Moteur électrique avec une transmission à roue dentée à excentrique selon la revendication 1,
**caractérisé par**
un unique élément de guidage (12a).

3. Moteur électrique avec une transmission à roue dentée à excentrique selon la revendication 2,
**caractérisé en ce que**
l'unique élément de guidage (12a) est prévu sur un bras de palier (12) relié à la roue excentrique (10) à une distance radiale par rapport à l'axe géométrique (9) qui dépasse la roue excentrique (10).

4. Moteur électrique avec une transmission à roue dentée à excentrique selon la revendication 1,
**caractérisé en ce que**
la partie de boîtier (6) comporte un élément de guidage (20) dans une direction perpendiculaire à l'axe géométrique (9) et la roue excentrique (10) comporte deux éléments de guidage (18, 19) qui sont guidés dans une direction perpendiculaire à l'axe (9) et perpendiculaire à la direction de mouvement de l'élément de guidage (20).
